# NEUE EUROPÄISCHE PATENTSCHRIFT

(11) **EP 2 766 282 B2**
(45) Veröffentlichungstag und Bekanntmachung des Hinweises auf die Entscheidung über den Einspruch: **30.12.2020**
(45) Hinweis auf die Patenterteilung: 14.06.2017
(21) Anmeldenummer: 12718598.1
(22) Anmeldetag: 26.04.2012
(51) Int. Cl.: B65D 85/10, B65D 75/58, B65B 19/02, B65B 9/06, B65B 19/22, B65B 51/30

(54) **VERFAHREN ZUM HERSTELLEN VON ZIGARETTENPACKUNGEN**
METHOD FOR PRODUCING CIGARETTE PACKAGES
PROCÉDÉ DE FABRICATION DE PAQUETS DE CIGARETTES

(30) Priorität: 11.10.2011 DE 102011115504; 25.11.2011 DE 102011119344
(43) Veröffentlichungstag der Anmeldung: 20.08.2014
(60) Teilanmeldung: 14003496.8 / 2 826 724
(73) Patentinhaber: Focke & Co. (GmbH & Co. KG), 27283 Verden (DE)
(72) Erfinder: BUSE, Henry, 27374 Visselhövede (DE)
(74) Vertreter: Aulich, Martin
(86) Internationale Anmeldenummer: PCT/EP2012/001802
(87) Internationale Veröffentlichungsnummer: WO 2013/053408

(56) Entgegenhaltungen:
- EP-A1- 0 007 423
- EP-A1- 0 566 521
- WO-A1-98/49072
- WO-A1-2011/009520
- DE-A1-102007 030 267
- DE-A1-102009 060 134
- DE-U1- 29 621 226
- GB-A- 981 118
- US-A- 2 879 635
- US-A- 3 007 295
- US-A- 6 164 444
- US-A1- 2007 108 263

## Beschreibung

Die Erfindung betrifft ein Verfahren zum Herstellen von Packungen für Zigaretten mit den Merkmalen des Oberbegriffs des Anspruchs 1.

Die Herstellung von Zigarettenpackungen in der Ausführung als "Flowpack", also bestehend aus einer (aromodichten) Folie als Umhüllung einer Zigarettengruppe, wobei an Längsseiten angeordnete Seitennähte und eine Quernaht als Flossennähte ausgebildet sind, erfordert besondere Maßnahmen. Insbesondere ist es schwierig, einen möglichst exakten quaderförmigen (Folien-)Block einer Zigarettengruppe als Inhalt für eine Außenpackung, vorzugsweise in der Ausführung als Klappschachtel, zu fertigen.

Die Herstellung von Dichtpackungen für Zigaretten in der Ausführung als "Flowpack" ist grundsätzlich bekannt (WO 98/49072 A1, DE 10 2010 019 867 A1). Weiterhin ist bekannt, bei der Fertigung dieses Typs einer Folienpackung aus einer fortlaufenden Bahn einen Überschuss an Luft zu entfernen, um unnötiges Packungsvolumen zu vermeiden. Beim Stand der Technik wird die Luft (ausschließlich) beim Anbringen der Quernähte der Beutel entfernt, und zwar über eine Öffnung im Bereich zwischen den Quernähten (EP 0 566 521 A1).

Der Erfindung liegt die Aufgabe zugrunde, Fertigungsmaßnahmen für Folienpackung der eingangs genannten Ausführung zu verbessern, derart, dass in einem fortlaufenden Fertigungsprozess exakte quaderförmige Folienpackungen geschaffen werden. Zur Lösung dieser Aufgabe wird erfindungsgemäß das Verfahren des Anspruchs 1 angewendet.

Die (Folien-)Packung selbst wird demnach mit Entlüftungsöffnungen versehen. In einem gesonderten Arbeitsverfahren wird Luft mittels Druck über die Entlüftungsöffnungen aus der Packung herausgedrückt. Danach werden die Entlüftungsöffnungen verschlossen.

Vorzugsweise werden die Entlüftungsöffnungen mit den (seitlichen) Verschlussnähten der Folienpackung in Verbindung gebracht, sodass bei der fertigen Packung die Entlüftungsöffnungen durch die als Flossennahte ausgebildeten Siegelnähte verschlossen sind.

Weitere Einzelheiten und Merkmale des erfindungsgemäßen Verfahrens sowie einer Vorrichtung zur Durchführung desselben werden nachfolgend anhand der Zeichnungen erläutert. Es zeigt:
- Fig. 1: eine (Zigaretten-)Packung bei geöffnetem Deckel in perspektivischer Darstellung,
- Fig. 2: die Packung gemäß Fig. 1 bei geöffnetem Dichtblock als Packungsinhalt, ebenfalls in Perspektive,
- Fig. 3: einen Abschnitt einer Materialbahn für Innen- bzw. Folienzuschnitte des Dichtblocks,
- Fig. 4: einen ausgebreiteten Zuschnitt eines Innenkragens,
- Fig. 5: einen packungsgerecht gefalteten Innenkragen eines Zuschnitts gemäß Fig. 4, in perspektivischer Rück- bzw. Unteransicht,
- Fig. 6: eine Einzelheit VI der Fig. 5 in vergrößertem Maßstab,
- Fig. 7: den gefalteten Innenkragen mit Zigarettengruppe in Vorderansicht bzw. Draufsicht, in perspektivischer Darstellung,
- Fig. 8: einen ausgebreiteten Zuschnitt für einen Packungs-Kragen,
- Fig. 9: einen Zuschnitt für eine Außenpackung in der Ausführung als Klappschachtel,
- Fig. 10: eine Schemadarstellung des Fertigungsprozesses einer Packung gemäß Fig. 1, Fig. 2, in perspektivischer Darstellung,
- Fig. 11: einen Dichtblock in perspektivischer Frontansicht,
- Fig. 12: den Dichtblock der Fig. 8 in perspektivischer Rückansicht,
- Fig. 13: einen Vertikalschnitt XIII-XIII der Packung gemäß Fig. 2 in vergrößertem Maßstab,
- Fig. 14: einen ausgebreiteten Zuschnitt für einen Innenkragen einer anderen Ausführungsform,
- Fig. 15: ein weiteres Ausführungsbeispiel eines Zuschnitts für einen Innenkragen,
- Fig. 16: einen Ausschnitt einer Materialbahn für die Fertigung von Zuschnitten für Innenkragen in der Ausführung gemäß Fig. 4.

Dichtpackungen für Zigaretten 10 (oder andere aromaempfindliche Raucherartikel) bestehen aus einer Innenpackung 11 und einer Außenpackung 12. Erstere ist ein Dichtblock, nämlich eine Zigarettengruppe 13, die von einer Innenumhüllung 14 aus aroma- und feuchtigkeitsdichter, siegelbarer und gegebenenfalls mehrlagiger Folie umgeben ist unter Bildung einer gegenüber Außeneinwirkungen dichten Packungseinheit. Die Außenpackung 12 soll weitgehend als standardmäßige Zigarettenpackung aus (dünnem) Karton oder gleichartigem Packstoff ausgebildet sein, vorliegend als Klappschachtel mit Schachtelteil 15 und Deckel 16. Die Klappschachtel 12 weist einen aus einem gesonderten Zuschnitt bestehenden Kragen auf, nämlich einen Packungskragen 17. Dieser ist, wie im Prinzip bekannt, im Schachtelteil 15 angeordnet und ragt teilweise aus diesem heraus. Der Packungskragen 17 umgibt die Innenpackung 11.

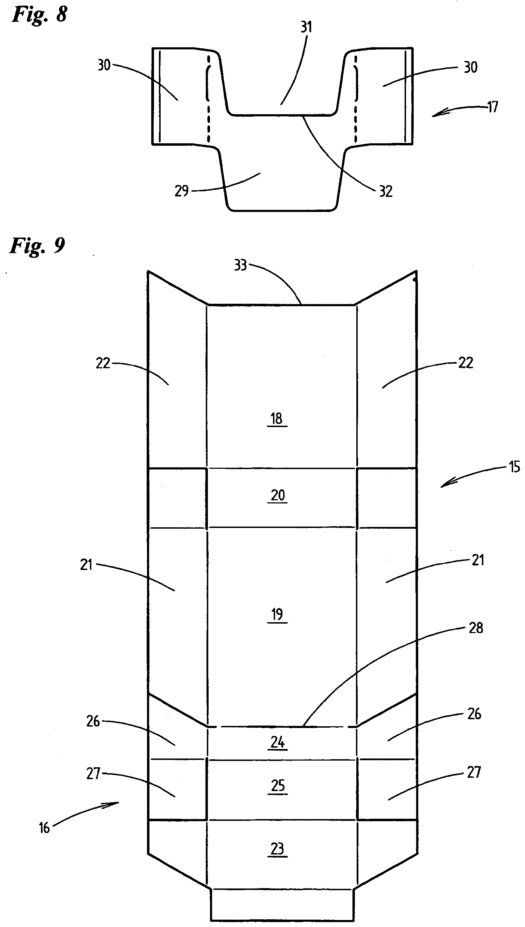

Die Außenpackung 12 in der Ausführung als Klappschachtel ist aus einem Zuschnitt gemäß Fig. 9 gefertigt. Der Schachtelteil 15 besteht aus Schachtel-Vorderwand 18, Schachtel-Rückwand 19 sowie Bodenwand 20. Schmale (aufrechte) Seitenwände werden aus (inneren und äußeren) Seitenlappen 21, 22 gebildet, die durch Klebung miteinander verbunden sind.

Der Deckel 16 besteht in analoger Weise aus Deckel-Vorderwand 23, Deckel-Rückwand 24, einer oberen Stirnwand 25 und (inneren sowie äußeren) Deckel-Seitenlappen 26, 27. Letztere bilden doppellagige Deckel-Seitenwände in Fortsetzung der Seitenwände 21/22 des Schachtelteils. Dieser ist mit dem Deckel 16 einstückig verbunden durch ein quergerichtetes Liniengelenk 28 zwischen Schachtel-Rückwand 19 und Deckel-Rückwand 24.

Der Kragen bzw. Packungskragen 17 (Fig. 8) besteht aus Kragen-Vorderwand 29 und Kragen-Seitenwänden 30. Die Kragen-Vorderwand 29 ist mit einer Ausnehmung 31 versehen, die im unteren Bereich durch eine Querkante 32 begrenzt ist. Eine Besonderheit besteht darin, dass die Ausnehmung 31 größer bzw. tiefer ist als üblich, nämlich derart, dass die Querkante 32 auf der Höhe bzw. unterhalb einer Schließkante 33 des Schachtelteils 15 liegt.

Die Innenpackung 11 weist eine die Zigarettengruppe 13 allseits umgebende Innenumhüllung 14 aus einem Folienzuschnitt 34 auf. Dieser wird von einer (zu einem schlauchförmigen Gebilde gefalteten) fortlaufenden Folienbahn 35 abgetrennt und bildet einen allseits geschlossenen Dichtblock mit (großflächiger) Innen-Vorderwand 39, gegenüberliegender Innen-Rückwand 40, oberer Innen-Stirnwand 41, unterer Innen-Bodenwand 42 und schmalen, aufrechten Innen-Seitenwänden 43, 44. Eine Verbindungsnaht 36 ist vorzugsweise rückseitig angeordnet, also im Bereich der Innen-Rückwand 40, und zwar quergerichtet (quer zur Längsausrichtung der Zigaretten 10). Verschlussnähte 37, 38 sind jeweils im Bereich schmaler, einander gegenüberliegender Wände der Innenpackung 11 angeordnet, nämlich im Bereich der (aufrechten) Innen-Seitenwände 43, 44, vorzugsweise (etwa) in deren Mitte.

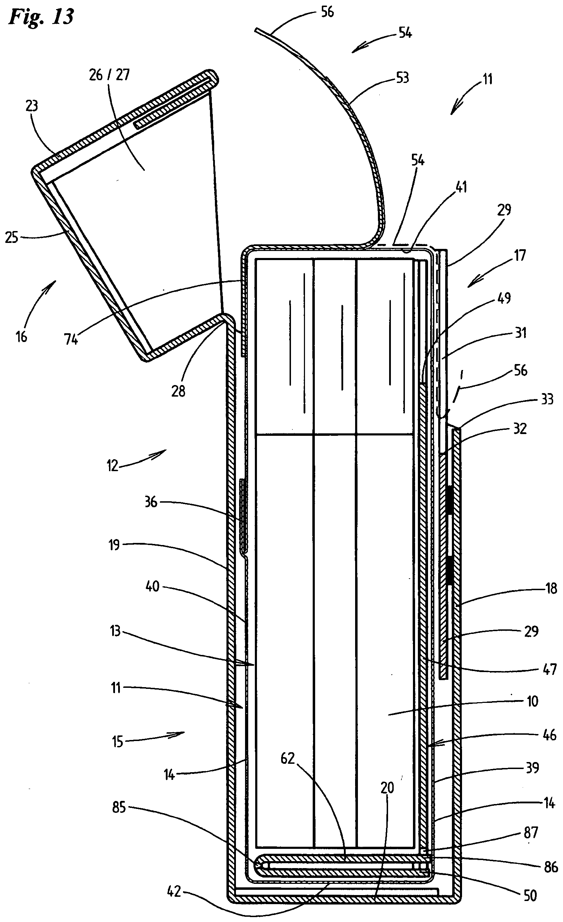

Bei der Herstellung der Nähte 36, 37, 38 entstehende, doppelwandige Siegellappen bzw. Flossen sind gegen die jeweilige Packungswand umgefaltet, liegen an dieser an und sind (thermisch) mit diesen verbunden. Bei der quergerichteten Verbindungsnaht 36 sind die miteinander verbundenen Flossen vorzugsweise nach oben umgefaltet (zur Innen-Stirnwand 41 gerichtet - Fig. 13).

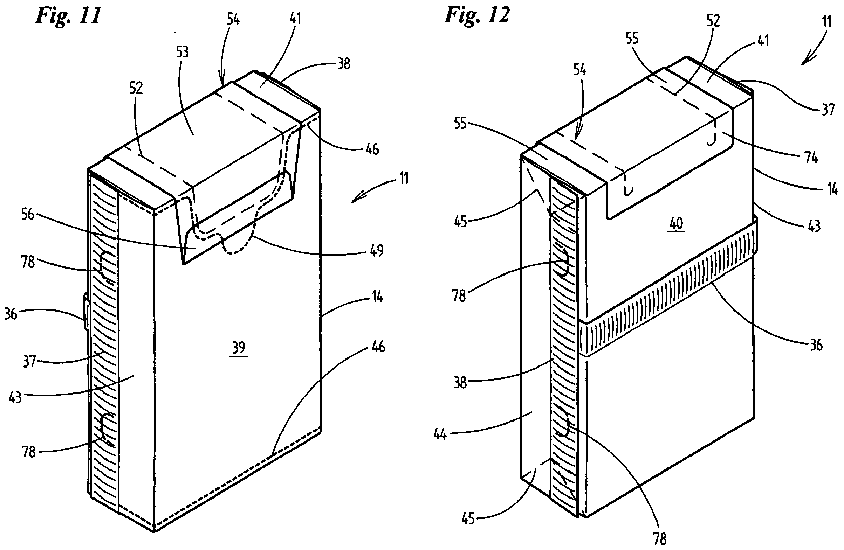

An den Enden der als Flossennaht ausgebildeten seitlichen Verschlussnähte 37, 38 entstehen durch die Faltung und Siegelung Überstände 45. Diese weisen jeweils einen dreieckförmigen Zwickel der Umhüllung und ein rechteckiges Endstück der Flossennaht auf. Die Überstände 45 sind im Bereich der Innen-Stirnwand 41 nach unten gefaltet (zur Anlage an der Innen-Seitenwand 43, 44) und im Bereich der Innen-Bodenwand 42 nach oben gefaltet. Die Überstände 45 werden aufgrund dieser Faltstellung durch den Packungskragen bzw. durch die Seitenwände der Außenpackung 12 abgedeckt. Vorteilhaft ist jedoch die in Fig. 11, Fig. 12 gezeigte Lösung, bei der die Überstände 45 bei der Fertigung des Dichtblocks nach innen gefaltet sind in eine Position zwischen den Innen-Seitenwänden 43, 44 einerseits und einem Stützorgan innerhalb des Dichtblocks andererseits.

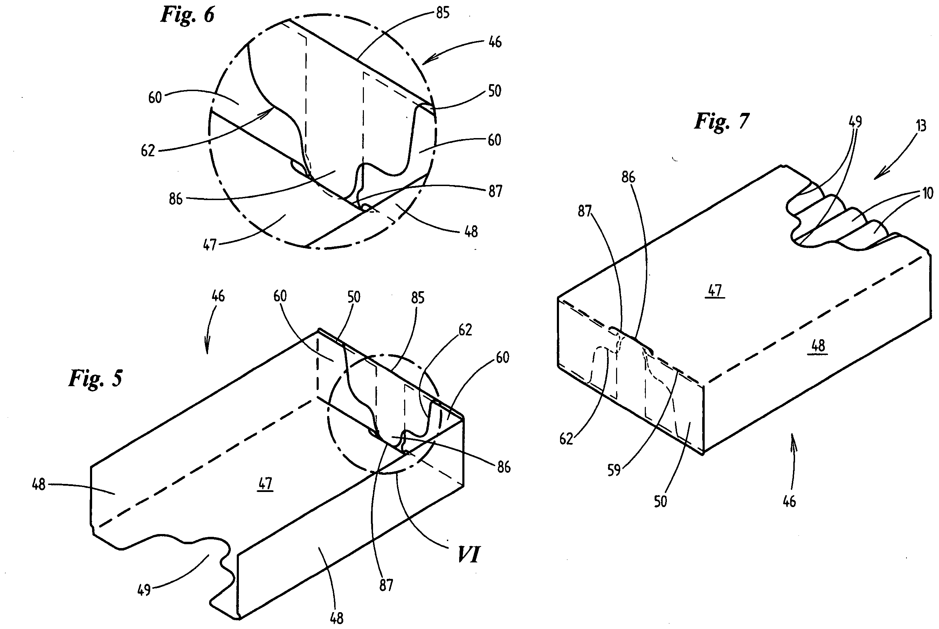

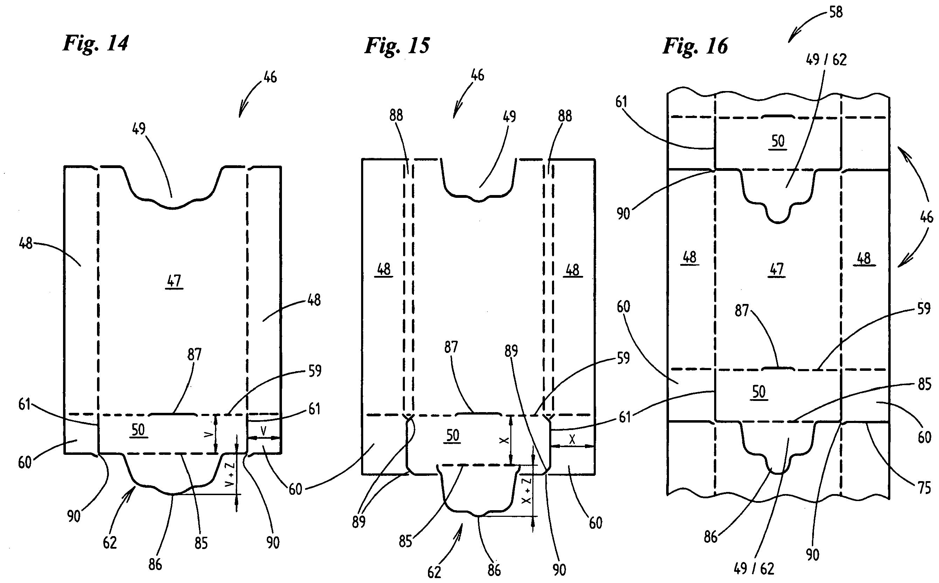

Dieses Stützorgan innerhalb der Innenpackung 11 ist ein Innenkragen 46 und besteht aus (dünnem) Karton oder ähnlichem mechanisch und thermisch belastbarem Werkstoff. Der Innenkragen 46 ist als gesonderter Zuschnitt vorzugsweise von einer fortlaufenden Materialbahn, vorzugsweise einer besonders ausgebildeten Kragenbahn 58 gemäß Fig. 16 abtrennbar. Grundsätzlich besteht der Innenkragen 46 aus einer Vorderwand bzw. Oberwand 47, aus Seitenwänden bzw. seitlichen Stützwänden 48 und einer Bodenwand bzw. einem Kragenboden 50, der entlang einer Faltlinie 59 in eine Stellung quer zur Oberwand 47 faltbar ist (Fig. 5-Fig. 7). Auch die seitlichen Stützwände 48 sind aufgerichtet bzw. quergefaltet, so dass der gefaltete Innenkragen 46 schubladenförmig ausgebildet ist und die Zigarettengruppe 13 an vier Seiten abdeckt.

Besondere Maßnahmen sind zur Stabilisierung der Faltstellung des Innenkragens 46 vorgesehen. In Fortsetzung der seitlichen Stützwände 48 sind Ecklappen 60 gebildet. Diese sind durch eine Stanzlinie 61 von dem Kragenboden 50 abgegrenzt und über eine Faltlinie in Verlängerung der Faltlinie 59 faltbar mit den seitlichen Stützwänden 48 verbunden. In der Faltstellung liegen die Ecklappen 60 an der Innenseite des aufgerichteten Kragenboden 50 an.

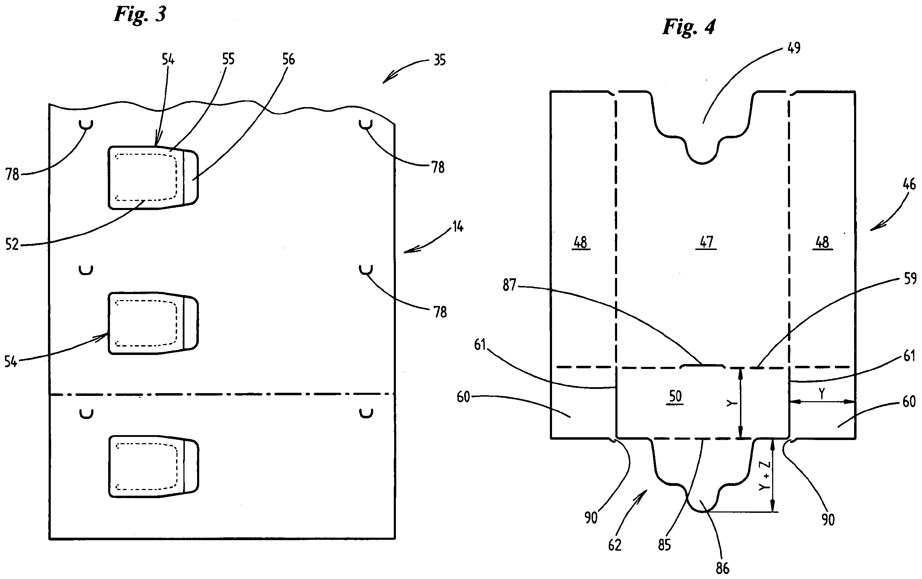

Die dreidimensionale Faltstellung des Innenkragens 46 wird dadurch stabilisiert, dass die Ecklappen 60 in der Faltstellung fixiert sind. Vorliegend werden hierfür mechanische Klemm- bzw. Haltemittel eingesetzt. Gemäß Fig. 4 ist als Fortsetzung des Kragenbodens 50 eine Haltelasche 62 mit dieser verbunden. Die Haltelasche 62 ist entlang einer Faltlinie 85 - vorzugsweise parallel zur Faltlinie 59 - in die Haltestellung für die Ecklappen 60 faltbar, nämlich in eine Stellung unter Anlage an den (gefalteten) Ecklappen 60 (Fig. 5, Fig. 6). Bei der Faltung des Innenkragens 46 werden demnach zunächst aufgrund einer Folge von Faltschritten die Ecklappen 60 gegen die Innenseite des Kragenbodens 50 gefaltet. Sodann wird die Haltelasche 62 gegen die Ecklappen 60 gefaltet und fixiert. Vorliegend ist die Haltelasche 62 als Stecklasche ausgebildet mit einem vorzugsweise mittigen Fortsatz bzw. einer Steckzunge 86. Diese wird in einen Halteschlitz 87 eingeführt, der im Bereich der Faltlinie 59 angeordnet ist, insbesondre aufgrund einer flachen C-förmigen Stanzung. Die Abmessungen sind so getroffen, dass die Steckzunge 86 als entsprechend bemessener Vorsprung mit einem Endstück in den Halteschlitz 87 eintritt und so die Haltelasche 62 fixiert.

Aufgrund besonderer Abmessungen der Faltlappen werden die Ecklappen 60 überwiegend formschlüssig in der Faltstellung (Fig. 5-Fig. 7) fixiert. Dies ist dadurch möglich, dass die Breite Y der Ecklappen 60 im Wesentlichen der Breite Y des Kragenbodens 50 entspricht. Die entlang der Faltlinie 85 gefaltete Haltelasche 62 hat einschließlich Vorsprung bzw. Steckzunge 86 eine Abmessung Y+Z, wobei Z die Einstecktiefe der Steckzunge 86 definiert. Durch diese klebstofffreie Verbindung werden die seitlichen Stützwände 48 und der Kragenboden 50 stabil in der aufgerichteten Stellung gehalten.

Der Innenkragen 46 erstreckt sich vorzugsweise über die gesamte Höhe bzw. Längsabmessung der Innenpackung 11. An der der Innen-Stirnwand 41 zugekehrten Seite bildet die Oberwand 47 eine Ausnehmung 49, wie sie bei einem Kragen üblich ist. Die Ausnehmung 49 entspricht in der Kontur und hinsichtlich der Abmessungen der Haltelasche 62, einschließlich Steckzunge 86.

In Einzelheiten abweichende Alternativformen der Innenkragen 46 sind in Fig 14, Fig. 15 dargestellt. Bei der erstgenannten Ausführung sind die seitlichen Stützwände 48 sehr schmal ausgebildet (für "Slim"-Zigaretten). Entsprechend schmal sind die Abmessungen V des Kragenbodens 50 und der Ecklappen 60. Die Haltelasche 62 ist in ihrer Form, insbesondere in der Abmessung angepasst, nämlich mit größerer Breite - in Richtung der Faltlinie 85 - bemessen, um eine ausreichende Abdeckung der schmalen Ecklappen 60 in deren Faltstellung zu gewährleisten. Die Einstecktiefe ist mit Z gekennzeichnet.

Der Innenkragen 46 gemäß Fig. 15 ist für Ausführungen mit konturierter Kragenkante 88 bestimmt, nämlich für Ausführungen mit Rundkanten oder Schrägkanten. Fig. 15 zeigt die letztgenannte Ausführung, bei der die schräggerichtete Kragenkante durch zwei parallele Einzelkanten definiert ist. Der Kragenboden 50 ist hieran angepasst, nämlich mit Schrägecken 89 versehen, also in der Kontur insgesamt achteckig.

In besonderer Weise ist die Haltelasche 62 ausgebildet und mit dem Kragenboden 50 verbunden, nämlich mit einer Faltlinie 85, die gegenüber einer äußeren, freien Randkante des Kragenbodens 50 zurückgesetzt ist. Durch entsprechende Stanzung liegt die Haltelasche 62 bis zur Faltlinie 85 gegenüber dem Kragenboden 50 frei. Wegen der besonderen Gestaltung der Kragenkanten 88 haben die Ecklappen 60 eine geringere Breite X als die gegebene Gesamtbreite des Kragenbodens 50. Die Faltlinie 85 ist versetzt angeordnet, so dass zwischen den Faltlinien 59 und 85 ein der Breite X der Ecklappen 60 entsprechender Abstand gewährleistet ist, der zu einer exakten formschlüssigen Verankerung der Ecklappen 60 führt. Die Haltelasche 62 ist hier so ausgebildet, dass eine größere (Abdeck-)Fläche für die Ecklappen 60 zu Verfügung steht und nur eine kleine (mittige) Steckzunge 86.

Eine weitere Besonderheit der Innenkragen 46 ist fertigungsbedingt. Die Ecklappen 60 sind jeweils über Restverbindungen 90 mit dem im Übrigen durch die Stanzlinie 61 von den Ecklappen 60 abgetrennten Kragenboden 50 verbunden. Die (beidseitig) gebildeten Restverbindungen 90 sind bei der Herstellung der Innenkragen 46 von einer fortlaufenden Materialbahn bzw. Kragenbahn (Fig. 16) von Bedeutung. Ein Stanzmesser für den Bereich des Kragenbodens erfordert herstellungsbedingt eine durchgängige Form. Dies kollidiert mit der Querstanzung 75 zur Abgrenzung der Ecklappen 60 gegenüber dem nachfolgenden Zuschnitt für einen Innenkragen 46. Die Restverbindungen 90 entstehen bei rechteckiger Ausbildung des Kragenbodens 50 durch ein entsprechend konturiertes Trennmesser für die Querstanzung 75. Nach der (kompletten) Stanzung der Materialbahn (Fig. 16) bleibt die Verbindung zwischen benachbarten Zuschnitten 46 (und zwischen Kragenboden 50 und Ecklappen 60) aufrechterhalten. Die Trennung benachbarter Zuschnitte 46 erfolgt zweckmäßig durch nachfolgende Trennwalzen mit geringfügig unterschiedlicher Fördergeschwindigkeit, so dass die Zuschnitte für den Innenkragen 46 durch Abreißen von der Bahn 58 abgetrennt werden.

Der Dichtblock bzw. die Innenpackung 11 ist mit einer mehrfach verschließbaren Entnahmeöffnung 51 versehen. Diese ist durch eine entsprechende Stanzung, vorliegend durch eine U-förmige Stanzlinie 52, in der Folie bzw. Innenumhüllung 14 begrenzt. Die Stanzlinie 52 umgibt eine entsprechend ausgebildete Öffnungslasche 53 als Teil der Innenumhüllung 14. Die Öffnungslasche 53 ist durch ein Verschlussetikett 54 abgedeckt, welches mit einem freien Verbindungsrand 55 an einem die Entnahmeöffnung 51 umgebenden Bereich fixierbar ist, insbesondere durch vollflächigen (Dauer-)Kleber. Am freien (unteren) Rand weist das Verschlussetikett 54 eine klebstofffreie Grifflasche 56 auf. Diese wird zum Betätigen (Öffnen, Schließen) des Verschlussetiketts 54 manuell erfasst.

Die Stanzlinie 52 und damit die Entnahmeöffnung 51 kann sich, wie gezeigt, im oberen Teil der Innen-Vorderwand 39, entlang der Innen-Stirnwand 41 und in einem anschließenden Randbereich der Innen-Rückwand 40 erstrecken. Entsprechend ist das Verschlussetikett 54 ausgebildet und angeordnet. Ein Verbindungsschenkel 74 fixiert das Verschlussetikett 54 im Bereich der Innen-Rückwand 40.

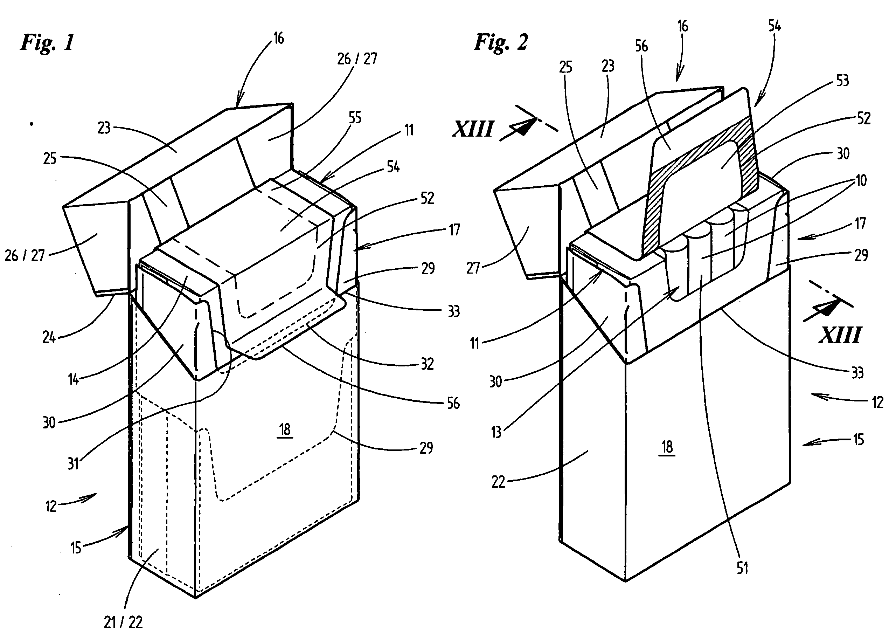

Die Innenpackung 11 ist in der Außenpackung 12 so positioniert, dass sich das Verschlussetikett 54 mit dem Klebstoff aufweisenden Bereich - Verbindungsrand 55 - oberhalb der Schließkante 33 der Schachtel-Vorderwand 18 befindet (Fig. 1). Die Grifflasche 56 ragt über die Schließkante 33 hinweg und liegt - nach erstmaligem Öffnen der Packung - in Schließstellung an der Außenseite der Schachtel-Vorderwand 18 an (Fig. 1). In der Ausgangsstellung, vor dem erstmaligen Öffnen, ist die Grifflasche 56 vorzugsweise umgefaltet (Fig. 13, gestrichelt) und wird durch die Deckel-Vorderwand 23 in Schließstellung des Deckels 16 verdeckt. Die Außenseite der Innenumhüllung 14 ist aufgrund der besonderen Gestaltung des Packungskragens 17 - tiefer liegende Querkante 32 - im Bereich der Ausnehmung 31 durchgehend frei für das Verschlussetikett 54, derart, dass in Schließstellung des Verschlussetiketts 54 die Grifflasche 56 an der Außenseite der Schachtel-Vorderwand 18 anliegt.

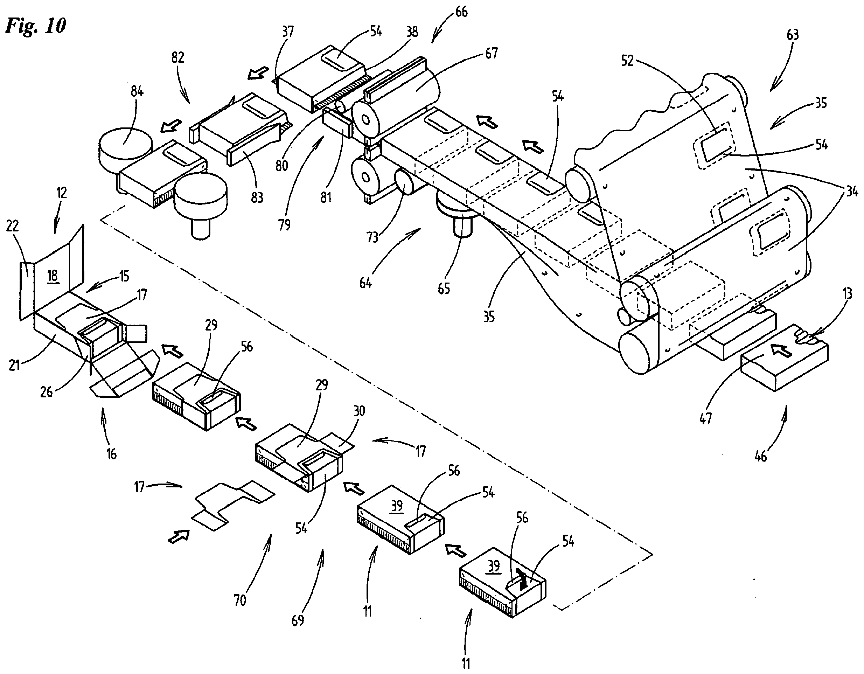

Die Fertigung von Innenpackungen 11 und die Vereinigung mit einer Außenpackung 12 ist schematisch in Fig. 10 dargestellt. Die anderweitig vorbereitete Folienbahn 35 wird einer Folienstation 63 zugeführt. Entlang einer Packungsbahn werden Einheiten aus einer Zigarettengruppe 13 und einem gefalteten Innenkragen 46 mit nach oben weisender Oberwand 47 zugeführt. Die Einheiten 13/46 sind mit quer zur Förderrichtung weisenden Zigaretten 10 ausgerichtet.

Die Folienbahn 35 wird vor der Übergabe an die Einheit 13/46 mit der U-förmigen Stanzlinie 52 für die Öffnungslasche 53 versehen, und zwar ebenfalls in einer quergerichteten Relativstellung. Auf die Außen- bzw. Oberseite der Folienbahn 35 wird im Bereich der Stanzlinie 52 das Verschlussetikett 54 aufgelegt und durch Klebung verbunden, entsprechend dem bevorstehenden Faltprozess versetzt zur Längsmittelebene der Folienbahn 35.

Die so vorbereitete Folienbahn 35 wird während fortlaufenden Transports auf die Oberseite der aufeinanderfolgenden Einheiten 13/46 aufgelegt, und zwar derart, dass sich die Öffnungshilfe 52, 54 im Bereich der seitwärts gerichteten Ausnehmung 49 der Oberwand 47 befindet.

Die mit entsprechender Breite ausgebildete Folienbahn 35 wird durch entsprechende Führungsorgane um die aufeinanderfolgenden Einheiten 13/46 herumgefaltet, so dass sich die Einheiten 13/46 in einem schlauchartigen Gebilde der Folienbahn 35 befinden. In einer nachfolgenden Längssiegelstation 64 werden die fortlaufend an der Unterseite der Bewegungsbahn entstehenden Längsränder der Folienbahn 35 durch Siegelorgane unter Bildung der Verbindungsnaht 36 gesiegelt. Hierzu sind drehende, scheibenförmige Siegelräder 65 unterhalb der Bewegungsbahn angeordnet. Unmittelbar anschließend befindet sich ein Organ zum fortlaufenden Umfalten der zunächst abstehenden, miteinander verbundenen Randlappen der in Längsrichtung der Folienbahn 35 verlaufenden Verbindungsnaht 36 (Flossennaht). Eine Andrückwalze 73 bewirkt das Umfalten der Verbindungsnaht 36 entsprechend dem Vorschub der Folienbahn 35.

Die schlauchförmige Folienbahn 35 mit den umhüllten Einheiten 13/46 gelangt sodann in eine zweite Siegelstation, nämlich Quersiegelstation 66. Hier werden Siegelorgane aktiv, die in einem Arbeitstakt gleichzeitig quergerichtete Verschlussnähte 37, 38 für zwei aufeinanderfolgende Innenpackungen 11 anbringen. Die Abstände zwischen den Einheiten 13/46 sind so gewählt, dass die benachbarten Verschlussnähte 37, 38 abfallfrei hergestellt und zugleich ein Trennschnitt zwischen diesen angebracht wird, mittig im Bereich entsprechend breiter (doppelter) Siegelnähte. Die Siegelorgane der Quersiegelstation 66 sind als Siegelwalzen 67 ausgebildet mit radial abstehenden Siegelbacken 68 und mittigen Trennmessern. Siegelorgane bzw. Siegelwalzen 67 sind oberhalb und unterhalb der Folienbahn 35 angeordnet und so gesteuert, dass zeitgleich untere und obere Siegelbacken 68 wirksam werden, so dass die beiden Lagen der Flossennähte in einem kurzen Siegeltakt (etwa) in halber Höhe der Einheiten 13/46 verbunden und gleichzeitig durchtrennt werden.

Eine Besonderheit besteht darin, dass nach der Herstellung der Verschlussnähte 37, 38 eine Entlüftung des geschlossenen Dichtblocks - Innenpackung 11 - durchgeführt wird. Zu diesem Zweck ist die Innenumhüllung 14 mit Entlüftungsöffnungen 78 versehen. Diese sind vorliegend als U-förmige Stanzung ausgebildet und bereits an der ungefalteten, ebenen Folienbahn 35 angebracht. Die Entlüftungsöffnungen 78 befinden sich in einem Bereich, der bei der fertigen Innenpackung 11 verschlossen bzw. durch Materiallagen verdeckt ist. Vorliegend sind die (U-förmigen) Entlüftungsöffnungen 78 benachbart zu beiden Längsrändern der Folienbahn 35 positioniert, derart, dass die Entlüftungsöffnungen 78 im Bereich einer rückseitigen Hälfte der Innen-Seitenwände 43 und/oder 44 angeordnet sind, neben den Verschlussnähten 37, 38. Nach dem (vollständigen) Verschluss des Dichtblocks wird die Entlüftung durchgeführt, also Luft aus der Innenpackung 11 über die freiliegenden Öffnungen 78 abgeleitet. Danach werden die Flossen der Verschlussnähte 37, 38 (zur Rückseite) umgefaltet, so dass die Entlüftungsöffnungen 78 überdeckt werden. Durch (thermisches) Fixieren der Verschlussnähte 37, 38 wird im Bereich der Entlüftungsöffnungen 78 volle Dichtigkeit des Dichtblocks geschaffen.

Vorliegend wird die Luft mechanisch, nämlich durch Drücken, über die Entlüftungsöffnungen 78 abgeführt. Im Anschluss an die Quersiegelstation 66 ist eine Entlüftungsstation 79 eingerichtet. Mit Hilfe von Andrückorganen, die an mehreren Flächen der Innenpackung 11 wirksam sind, wird die Luft aus der Innenpackung herausgedrückt. Vorliegend ist an der Oberseite (Innen-Vorderwand 39) und/oder an der Unterseite eine Entlüftungswalze 80 wirksam. Seitlich sind ebenfalls Druckorgane wirksam, nämlich vorliegend (querbewegbare) Entlüftungsschienen 81, die den Entlüftungsdruck auf die seitwärts gerichteten Flächen - Stirnfläche 41, Bodenfläche 42 - ausüben.

In einem nachfolgenden Arbeitsschritt werden die Lappen der Verschlussnähte 37, 38 umgefaltet in die beschriebene Stellung. Hierzu werden die Innenpackungen 11 durch eine (quergerichtete) Falt- und Siegelstation 82 hindurchgefördert. In einem ersten Schritt werden die (seitlich in Förderrichtung liegenden) Flossen der Verschlussnähte 37, 38 umgefaltet durch Faltorgane, nämlich ortsfeste Faltschienen 83 zu beiden Seiten der Bewegungsbahn der Innenpackungen 11. Im Anschluss daran sind Siegelorgane wirksam zum Ansiegeln der gefalteten Flossen an die Innen-Seitenwände 43, 44. Hierzu dienen Siegelrollen 84. Die Falt- und Siegelstation 82 ist einem quergerichteten Förderabschnitt der Innenpackungen 11 im Anschluss an die Quersiegelstation 66 zugeordnet. Eine Besonderheit wird hinsichtlich der Überstände 45 der Verschlussnähte 37, 38 verwirklicht. Diese werden - als Alternative zur Umfaltung gegen die Innen-Seitenwände 43, 44 - nach innen gefaltet, nämlich in eine Stellung zwischen den Innen-Seitenwänden 43, 44 einerseits und dem Innenkragen 46 bzw. den seitlichen Stützwänden 48 andererseits. Die sichtbaren Verschlussnähte 37, 38 erstrecken sich so über die volle Höhe der Innen-Seitenwände 43, 44 und enden (etwa) bündig mit der Innen-Stirnwand 41 bzw. der Innen-Bodenwand 42 (Fig. 11, Fig. 12).

Sodann werden die Innenpackungen 11 - ggf. durch nochmaliges Umlenken - in eine Packungsbahn 69 übergeben, in der die Innenpackungen 11 - bei Ausrichtung der Zigaretten in Förderrichtung - mit vornliegender Innen-Bodenwand 42 transportiert (Fig. 10) werden. Die Grifflasche 56 des im rückwärtigen Bereich an der Oberseite liegenden Verschlussetiketts 54 wird um 180° entgegen der Transportrichtung gefaltet bis zur Anlage an dem freien Teil des Verschlussetiketts 54, wodurch die in Fig. 11 gezeigte Anordnung geschaffen wird. Die Abmessungen sind dort so getroffen, dass die durch die Stanzlinie 52 begrenzte Öffnungslasche 53 (im Bereich der Innen-Vorderwand 39) kleiner ist als die Ausnehmung 49 des Innenkragens 46. Das Verschlussetikett 54 hingegen ist in den Abmessungen größer als die Kontur der Ausnehmung 49.

Im Bereich einer nachfolgenden Kragenstation 70 werden vorgefertigte Zuschnitte des Packungskragens 17 in Querrichtung zugeführt und positionsgenau auf die Oberseite der Innenpackungen 11 aufgelegt, derart, dass das Verschlussetikett 54 einschließlich Grifflasche 56 innerhalb der Ausnehmung 31 des Packungskragens 17 liegen.

Die Faltung des Packungskragens 17 wird durch Anlegen der Kragen-Seitenwände 30 an die Innen-Seitenwände 43, 44 vollendet. Der so komplette Dichtblock (Innenpackung 11) wird nun in eine teilweise gefaltete Außenpackung 12 in der Ausführung als Klappschachtel eingeführt. Diese befindet sich in einer Tasche eines Faltrevolvers in einer derartigen Relativstellung, dass die dem Deckel 16 zugekehrte Seite offen und gegenüberliegend die Bodenwand 20 mit Schachtel-Vorderwand 18 und Seitenlappen aufgerichtet ist. Des Weiteren sind die innenliegenden Seitenlappen 21 und Deckel-Seitenlappen 26 aufgerichtet. Der Dichtblock kann demnach - einschließlich Packungskragen 17 - in herkömmlicher Weise in die Außenpackung 12 eingeführt und diese danach komplettiert werden. Für diesen wesentlichen Bereich kann ein herkömmlicher Packer für Klappschachteln eingesetzt werden.

**Bezugszeichenliste**

| | | | |
|---|---|---|---|
| 10 | Zigarette | 53 | Öffnungslasche |
| 11 | Innenpackung | 54 | Verschlussetikett |
| 12 | Außenpackung | 55 | Verbindungsrand |
| 13 | Zigarettengruppe | 56 | Grifflasche |
| 14 | Innenumhüllung | 57 | Etikettenrand |
| 15 | Schachtelteil | 58 | Kragenbahn |
| 16 | Deckel | 59 | Faltlinie |
| 17 | Packungskragen | 60 | Ecklappen |
| 18 | Schachtel-Vorderwand | 61 | Stanzlinie |
| 19 | Schachtel-Rückwand | 62 | Haltelasche |
| 20 | Bodenwand | 63 | Folienstation |
| 21 | Seitenlappen | 64 | Längssiegelstation |
| 22 | Seitenlappen | 65 | Siegelrad |
| 23 | Deckel-Vorderwand | 66 | Quersiegelstation |
| 24 | Deckel-Rückwand | 67 | Siegelwalze |
| 25 | Stirnwand | 68 | Siegelbacke |
| 26 | Deckel-Seitenlappen | 69 | Packungsbahn |
| 27 | Deckel-Seitenlappen | 70 | Kragenstation |
| 28 | Liniengelenk | 71 | Randlappen |
| 29 | Kragen-Vorderwand | 72 | Randlappen |
| 30 | Kragen-Seitenwand | 73 | Andrückwalze |
| 31 | Ausnehmung | 74 | Verbindungsschenkel |
| 32 | Querkante | 75 | Querstanzung |
| 33 | Schließkante | 78 | Entlüftungsöffnung |
| 34 | Folienzuschnitt | 79 | Entlüftungsstation |
| 35 | Folienbahn | 80 | Entlüftungswalze |
| 36 | Verbindungsnaht | 81 | Entlüftungsschiene |
| 37 | Verschlussnaht | 82 | Falt- und Siegelstation |
| 38 | Verschlussnaht | 83 | Faltschiene |
| 39 | Innen-Vorderwand | 84 | Siegelrolle |
| 40 | Innen-Rückwand | 85 | Faltlinie |
| 41 | Innen-Stirnwand | 86 | Steckzunge |
| 42 | Innen-Bodenwand | 87 | Halteschlitz |
| 43 | Innen-Seitenwand | 88 | Kragenkante |
| 44 | Innen-Seitenwand | 89 | Schrägecke |
| 45 | Überstand | 90 | Restverbindung |
| 46 | Innenkragen | | |
| 47 | Oberwand | | |
| 48 | Stützwand | | |
| 49 | Ausnehmung | | |
| 50 | Kragenboden | | |
| 51 | Entnahmeöffnung | | |
| 52 | Stanzlinie | | |

## Patentansprüche

1. Verfahren zum Herstellen von Packungen für Zigaretten (10), bestehend aus einer formstabilen Außenpackung (12) und einer Innenpackung (11) in der Ausführung als Folien-Dichtblock (11) mit einer Innenumhüllung (14) aus vorzugsweise aroma- und feuchtigkeitsdichter, thermisch siegelbarer Folie zur Umhüllung einer Zigarettengruppe (13), die im Bereich einer Innen-Stirnwand (41) und eines angrenzenden, stirnseitigen Bereichs einer Innen-Vorderwand (39) eine Entnahmeöffnunq (51) mit einem mehrfach benutzbaren Verschlussetikett (54) aufweist, welches die Entnahmeöffnunq (51) in Schließstellung überdeckt, und zur Umhüllung eines die Zigarettengruppe (13) teilweise umfassenden Innenkragens (46), wobei die Umhüllung eine sich quer zu den Zigaretten (10) über die volle Breite des Dichtblocks (11) erstreckende Verbindungsnaht (36) in der Ausführung als Flossennaht und an zwei einander gegenüberliegenden schmalen Flächen, nämlich an Innen-Seitenwänden (43, 44), angeordnete, durchgehende Verschlussnähte (37, 38) ebenfalls in der Ausführung als Flossennaht, aufweist, **gekennzeichnet durch** folgende Merkmale:
a) eine fortlaufende Folienbahn (35) in der Breite eines Zuschnitts für die Innenpackung (11) bei einer Umhüllung der Zigarettengruppe (13) in Längsrichtung der Zigaretten wird in einem außermittigen Bereich mit Stanzlinien (52) für eine Öffnungslasche (53) der Innenpackung (11) und mit einem den Bereich der Stanzlinie (52) überdeckenden Verschlussetikett (54) versehen und sodann einer Folienstation (63) fortlaufend zugeführt,
b) im Bereich der Folienstation (63) werden entlang einer Förderbahn aufeinanderfolgend Einheiten aus einer Zigarettengruppe (13) und einem diese teilweise umfassenden Innenkragen (46) zugeführt, mit nach oben gerichteter Oberwand (47), wobei die Zigaretten der Zigarettengruppe (13) quer zur Förderrichtung weisen,
c) die vorbereitete Folienbahn (35) wird etwa mittig auf die aufeinanderfolgenden Einheiten (13/46) aufgelegt, derart, dass die durch die Stanzlinie (52) definierte Entnahmeöffnung (51) mit Öffnungslasche (53) im Bereich einer Ausnehmung (49) der Oberwand (47) des Innenkragens (46) liegt.
d) die Folienbahn (35) wird um die aufeinanderfolgend transportierten Packungseinheiten (13/46) herumgefaltet unter Bildung einer schlauchartigen Umhüllung, wobei Randstreifen der Folienbahn (35) unterhalb der Bewegungsebene der Packungseinheiten (13/46) zusammengeführt werden,
e) in einer ersten Siegelstation (64) - Längssiegelstation (64) - werden die Randstreifen der Folienbahn (35) unter Bildung einer fortlaufenden Flossennaht, nämlich einer Verbindungsnaht (36), durch thermisches Siegeln miteinander verbunden,
f) die schlauchförmige Folienbahn (35) mit den Packungseinheiten (13/46) wird sodann einer zweiten Siegelstation, nämlich Quersiegelstation (66), zugeführt, in der im Bereich zwischen aufeinanderfolgenden Packungseinheiten (13/46) die Lagen der Folienbahn (35) unter Bildung von quergerichteten Verschlussnähten (37, 38) miteinander verbunden und zugleich ein mittiger Trennschnitt zwischen den Verschlussnähten (37, 38) ausgeführt wird,
g) gleichzeitig oder danach werden die Flossen der Verschlussnähte (37, 38) gegen die Innen-Seitenwände (43, 44) umgefaltet,
h) im Bereich einer nachfolgenden Kragenstation (70) werden Zuschnitte der Packungskragen (17) der Außenpackung (12) quer zur Packungsbahn (69) der Innenpackungen (11) zugeführt und auf die Oberseite derselben aufgelegt, und zwar außerhalb des Bereichs des Verschlussetiketts (54),
i) sodann werden Kragen-Seitenwände (30) des Packungskragens (17) gegen die Innen-Seitenwände (43, 44) umgefaltet,
j) die fertige Innenpackung (11) mit Packungskragen (17) wird schließlich in eine teilweise gefaltete, im Bereich eines Deckels (16) offene Außenpackunq (12) eingeschoben und diese sodann fertiggefaltet.
k) die Innenpackung (11) wird nach Anbringen der Verbindungsnaht (36) und der Verschlussnähte (37, 38) über Entlüftungsöffnungen (78) in der Innenumhüllung (14) durch Übertragung von Druck auf eine oder mehrere Flächen der Innenpackung (11) entlüftet, wobei nach der Entlüftung die Entlüftungsöffnungen (78) verschlossen werden.

2. Verfahren nach Anspruch 1, **dadurch gekennzeichnet, dass** die Entlüftungsöffnungen (78) in einem Bereich eines Zuschnitts der Innenpackung (11) angebracht sind, der bei der fertigen Innenpackung (11) verschlossen bzw. durch Materiallagen verdeckt ist, insbesondere benachbart zu Längsrändern einer Folienbahn (35) zum Herstellen von Zuschnitten für die Innenpackung (11), sodass die Entlüftungsöffnungen neben Verschlussnähten (37, 38) angeordnet und durch Umfalten der Verschlussnähte (37, 38) und durch bevorzugt thermisches Fixieren verschlossen werden.

3. Verfahren nach Anspruch 1 oder 2, **dadurch gekennzeichnet, dass** die Entlüftungsöffnungen (78) in einem Bereich einer rückseitigen Hälfte von Innen-Seitenwänden (43 und/oder 44) der Innenpackung (11) angeordnet sind, neben den Verschlussnähten (37, 38), wobei die Flossen der Verschlussnähte (37, 38) nach der Entlüftung zur Rückseite der Innenpackung (11) umgefaltet werden und die Entlüftungsöffnungen (78) überdecken und diese sodann durch thermisches Fixieren der Flossen verschlossen werden.

4. Verfahren nach Anspruch 1 oder einem der weiteren Ansprüche, **dadurch gekennzeichnet, dass** die Entlüftungsöffnungen (78) der Innenpackung (11) als U-förmige Stanzung der Folie der Innenpackung (11) ausgebildet und an der ungefalteten, ebenen Folienbahn (35) zum Herstellen von Zuschnitten für die Innenpackung (11) angebracht sind, insbesondere benachbart zu beiden Längsrändern der Folienbahn (35).

## Claims

1. A method of producing packs for cigarettes (10), comprising a dimensionally stable outer pack (12) and an inner pack (11) configured in the form of a sheet-material sealed block (11) and having an inner wrapper (14) made of preferably aroma-tight and moisture-tight, thermally sealable sheet material for wrapping a cigarette group (13), which in the region of an end wall (41) and of an adjacent end region of an inner front wall (39), has a removal opening (51) with a closure label (54) which can be used a number of times and which covers over the removal opening (51) in the closed position, and for wrapping an inner collar (46) partially enclosing the cigarette group (13), wherein the wrapper has a connecting seam (36) which extends over the entire width - transversely to the cigarettes (10) - of the sealed block (11) and is configured in the form of a fin seam, and continuous closure seams (37, 38) also configured as fin seams and arranged on two mutually opposite narrow surfaces, namely on inner side walls (43, 44), **characterized by the following features:**
a) during wrapping of the cigarette group (13) in the longitudinal direction of the cigarettes, a continuous sheet-material web (35) in the width of a blank for the inner pack (11) is provided, in an off-centre region, with punching lines (52) for an opening tab (53) of the inner pack (11) and with a closure label (54), which covers over the region of the punching line (52), and is then fed continuously to a sheet-material station (63),
b) in the region of the sheet-material station (63), units made up of a cigarette group (13) and an inner collar (46) partially enclosing the same are fed one after the other, with the upper wall (47) directed upward, along a conveying path, wherein the cigarettes of the cigarette group (13) are oriented transversely to the conveying direction,
c) the prepared sheet-material web (35) is positioned approximately centrally on the successive units (13/46), such that the removal opening (51) with opening tab (53), the opening being defined by the punching line (52), is located in the region of a recess (49) of the upper wall (47) of the inner collar (46),
d) the sheet-material web (35) is folded around the successively transported pack units (13/46) to form a tubular wrapper, wherein peripheral strips of the sheet-material web (35) are brought together beneath the movement plane of the pack units (13/46),
e) in a first sealing station (64) - longitudinal sealing station (64) - the peripheral strips of the sheet-material web (35) are connected to one another by thermal sealing to form a continuous fin seam, that is to say a connecting seam (36),
f) the tubular sheet-material web (35) with the pack units (13/46) is then fed to a second sealing station, that is to say a transverse sealing station (66), in which, in the region between successive pack units (13/46), the layers of the sheet-material web (35) are connected to one another to form transversely directed closure seams (37, 38) and, at the same time, a central severing cut is executed between the closure seams (37, 38),
g) at the same time or thereafter, the fins of the closure seams (37, 38) are folded over against the inner side walls (43, 44),
h) in the region of a downstream collar station (70), blanks of the pack collars (17) of the outer pack (12) are fed transversely to the pack path (69) of the inner packs (11) and are positioned on the upper side of the same, to be precise outside the region of the closure label (54),
i) then collar side walls (30) of the pack collar (17) are folded over against the inner side walls (43, 44),
j) finally, the finished inner pack (11) with pack collar (17) is pushed into a partially folded outer pack (12), which is open in the region of a lid (16), and said outer pack is then folded definitively,
k) once the connecting seam (36) and the closure seams (37, 38) are applied, the inner pack (11) is vented via venting openings (78) in the inner wrapper (14) by means of pressure being transmitted to one or more surfaces of the inner pack (11), wherein, following venting, the venting openings (78) are closed.

2. The method as claimed in claim 1, **characterized in that** the venting openings (78) are applied in a region of a blank of the inner pack (11) which in the finished inner pack (11) is closed or covered by material layers, in particular adjacent to longitudinal peripheries of a sheet-material web (35) for producing blanks for the inner pack (11), such that the venting openings are disposed adjacent to closure seams (37, 38) and closed by the folding over of the closure seams (37,38) and by preferably thermal fixing.

3. The method as claimed in claim 1 or 2, **characterized in that** the venting openings (78) are arranged in a region of a rear half of inner side walls (43 and/or 44) of the inner pack (11), alongside the closure seams (37, 38), wherein, following venting, the fins of the closure seams (37, 38) are folded over in the direction of the rear side of the inner pack (11) and covering over the venting openings (78), with the latter then being closed by thermal fixing of the fins.

4. The method as claimed in claim 1 or one of the further claims, **characterized in that** the venting openings (78) of the inner pack (11) are designed in the form of a U-shaped punching formation in the sheet material of the inner pack (11) and are applied to the non-folded, planar sheet-material web (35) for producing blanks of the inner pack (11), in particular adjacent to both longitudinal peripheries of the sheet material web (35).

## Revendications

1. Procédé de fabrication de paquets de cigarettes (10), se composant d'un emballage extérieur de forme stable (12) et d'un emballage intérieur (11) réalisé sous forme de bloc étanche en feuille (11) avec une enveloppe intérieure (14) en feuille thermosoudable de préférence étanche aux arômes et à l'humidité pour l'emballage d'un groupe de cigarettes (13), laquelle, dans la région d'une paroi frontale intérieure (41) et d'une région frontale adjacente d'une paroi avant intérieure (39), présente une ouverture de prélèvement (51) avec une étiquette de fermeture réutilisable (54) qui recouvre l'ouverture de prélèvement (51) dans la position de fermeture, et pour l'emballage d'un étui intérieur (46) entourant partiellement le groupe de cigarettes (13), dans lequel l'enveloppe présente une soudure de liaison (36) réalisée sous forme de soudure à ailette, s'étendant transversalement aux cigarettes (10) sur toute la largeur du bloc d'étanchéité (11) et des soudures de fermeture continues (37, 38), également réalisées sous forme de soudures à ailette, disposées sur deux surfaces étroites opposées l'une à l'autre, à savoir sur des parois latérales intérieures (43, 44),
**caractérisé par les caractéristiques suivantes** :
a) une bande de feuille continue (35) à la largeur d'un coupon de l'emballage intérieur (11) dans le cas d'un emballage du groupe de cigarettes (13) dans la direction longitudinale des cigarettes est pourvue, dans une région excentrée, de lignes de découpage (52) pour une patte d'ouverture (53) de l'emballage intérieur (11) et d'une étiquette de fermeture (54) recouvrant la région de la ligne de découpage (52), et est ensuite acheminée en continu à une station de feuille (63),
b) dans la région de la station de feuille (63) sont acheminées successivement, le long d'une bande transporteuse, des unités constituées d'un groupe de cigarettes (13) et d'un étui intérieur (46) entourant celui-ci en partie, avec une paroi supérieure (47) orientée vers le haut, les cigarettes du groupe de cigarettes (13) étant orientées transversalement à la direction de transport,
c) la bande de feuille préparée (35) est posée approximativement au centre sur les unités successives (13/46) de telle sorte que l'ouverture de prélèvement (51) définie par la ligne de découpage (52) soit située avec la patte d'ouverture (53) dans la région d'un évidement (49) de la paroi supérieure (47) de l'étui intérieur (46),
d) la bande de feuille (35) est repliée autour des unités d'emballage (13/46) transportées successivement en formant une enveloppe en forme de tuyau souple, des bandes marginales de la bande de feuille (35) étant assemblées en dessous du plan de déplacement des unités d'emballage (13/46),
e) les bandes marginales de la bande de feuille (35) sont assemblées l'une à l'autre par soudage thermique dans une première station de soudage (64), à savoir une station de soudage en long (64), en formant un joint à ailette continu, à savoir un joint de liaison (36),
f) la bande de feuille en forme de tuyau souple (35) avec les unités d'emballage (13/46) est ensuite acheminée à une deuxième station de soudage, à savoir une station de soudage transversal (66), dans laquelle les couches de la bande de feuille (35) sont assemblées l'une à l'autre dans la région située entre des unités d'emballage successives (13/46) avec formation de soudures de fermeture orientées transversalement (37, 38), et en même temps une coupe de séparation centrale est effectuée entre les soudures de fermeture (37, 38),
g) simultanément ou ultérieurement, les ailettes des soudures de fermeture (37, 38) sont repliées contre les parois latérales intérieures (43, 44),
h) dans la région d'une station d'étui suivante (70), des coupons des étuis d'emballage (17) de l'emballage extérieur (12) sont acheminés transversalement à la bande d'emballage (69) des emballages intérieurs (11) et sont posés sur son côté supérieur, à savoir à l'extérieur de la région de l'étiquette de fermeture (54),
i) ensuite, des parois latérales d'étui (30) de l'étui d'emballage (17) sont repliées contre les parois latérales intérieures (43, 44),
j) l'emballage intérieur fini (11) avec l'étui d'emballage (17) est finalement inséré dans un paquet extérieur (12) partiellement plié, ouvert dans la région d'un couvercle (16), et celui-ci est ensuite plié de manière définitive,
k) l'air est évacué de l'emballage intérieur (11), après la formation de la soudure de liaison (36) et des soudures de fermeture (37, 38), via des ouvertures d'évacuation de l'air (78) dans l'enveloppe intérieure (14) par transmission de pression sur une ou plusieurs des faces de l'emballage intérieur (11), les ouvertures d'évacuation de l'air (78) étant obturées après l'évacuation de l'air.

2. Procédé selon la revendication 1, **caractérisé en ce que** les ouvertures d'évacuation de l'air (78) sont pratiquées dans une région d'un coupon de l'emballage intérieur (11), qui, dans l'emballage intérieur terminé (11), est fermée ou couverte par des couches de matière, en particulier à proximité de bords longitudinaux d'une bande de feuille (35) destinée à la fabrication de coupons pour l'emballage intérieur (11), de telle manière que les ouvertures d'évacuation de l'air soient disposées à côté de soudures de fermeture (37, 38) et soient fermées par pliage des soudures de fermeture (37, 38) et par fixation de préférence thermique.

3. Procédé selon la revendication 1 ou 2, **caractérisé en ce que** les ouvertures d'évacuation de l'air (78) sont disposées dans une région d'une moitié arrière de parois latérales intérieures (43 et/ou 44) de l'emballage intérieur (11), à côté des soudures de fermeture (37, 38), les ailettes des soudures de fermeture (37, 38) étant repliées après l'évacuation de l'air sur le côté arrière de l'emballage intérieur (11) et recouvrant les ouvertures d'évacuation de l'air (78) et celles-ci étant alors obturées par fixation thermique des ailettes.

4. Procédé selon la revendication 1 ou l'une quelconque des autres revendications, **caractérisé en ce que** les ouvertures d'évacuation de l'air (78) de l'emballage intérieur (11) sont réalisées par un découpage en forme de U de la feuille de l'emballage intérieur (11) et sont pratiquées sur la bande de feuille plane non repliée (35) destinée à la fabrication de coupons pour l'emballage intérieur (11), en particulier à proximité des deux bords longitudinaux de la bande de feuille (35).
